(19) **Europäisches Patentamt European Patent Office Office européen des brevets**

(11) **EP 4 692 256 A1**

(12) **EUROPEAN PATENT APPLICATION**
published in accordance with Art. 153(4) EPC

(43) Date of publication:
**11.02.2026   Bulletin 2026/07**

(21) Application number: **24780865.2**

(22) Date of filing: **29.03.2024**

(51) International Patent Classification (IPC):
**C09D 11/38** (2014.01)       **B41J 2/01** (2006.01)
**B41J 2/175** (2006.01)       **B41M 5/00** (2006.01)
**C09D 11/40** (2014.01)

(52) Cooperative Patent Classification (CPC):
**B41J 2/01; B41J 2/175; B41M 5/00; C09D 11/38; C09D 11/40**

(86) International application number:
**PCT/JP2024/013201**

(87) International publication number:
**WO 2024/204771 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023   JP 2023058772**

(71) Applicant: **Maxell, Ltd.**
**Kyoto 618-8525 (JP)**

(72) Inventors:
• **NISHIMOTO, Tomohisa**
**Otokuni-gun, Kyoto 618-8525 (JP)**
• **HARADA, Yujiro**
**Otokuni-gun, Kyoto 618-8525 (JP)**
• **UENO, Hiroaki**
**Otokuni-gun, Kyoto 618-8525 (JP)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(54) **INK COMPOSITION, INK SET, INK PACK, AND INKJET RECORDING METHOD**

(57)     The present invention relates to an ink composition comprising a polymerizable compound, a polyolefin, and a polyolefin aggregation inhibitor.

**EP 4 692 256 A1**

## Description

TECHNICAL FIELD

This patent application claims the benefit of priority of Japanese Patent Application No. 2023-058772 (filing date: March 31, 2023) under the Paris Convention for the protection of industrial property, the entire contents of which are incorporated herein by reference.

The present invention relates to an ink composition, an ink set, an ink pack, and an inkjet recording method.

BACKGROUND ART

An inkjet method of discharging ink in the form of droplets from an ink nozzle head is applied to many printers for the reasons of being small and inexpensive and capable of forming an image in a non-contact manner on the surface of a recording medium. In recent years, from the viewpoints of environmental problems and small risk of touching the ink at the time of ink replacement work, the ink has been increasingly provided not in the form of a bottle but in the form of a pouch, and a pouch including a plastic film is used as the pouch (Patent Document 1).

PRIOR ART DOCUMENT

PATENT DOCUMENT

Patent Document 1: JP-A-2010-214868

SUMMARY OF THE INVENTION

PROBLEMS TO BE SOLVED BY THE INVENTION

However, when the pouch including a plastic film as described in Patent Document 1 is filled with the ink composition, the storage stability of the ink is not necessarily sufficient. In particular, when the ink composition is used under high-speed and high-definition printing conditions, clogging of the ink head may occur.

Accordingly, an object of the present invention is to provide an ink composition having excellent storage stability.

SOLUTIONS TO THE PROBLEMS

As a result of intensive studies to solve the problems, the present inventors have reached the present invention. That is, the present invention includes the following preferred embodiments.

[1] An ink composition comprising: a polymerizable compound; a polyolefin; and a polyolefin aggregation inhibitor.

[2] The composition according to [1], wherein the aggregation inhibitor contains nanoparticles and/or a polymer dispersant.

[3] The composition according to [2], wherein at least a part of the polyolefin is adsorbed to the nanoparticles.

[4] The composition according to [2], wherein at least a part of the polyolefin is dispersed in the composition.

[5] The composition according to any one of [1] to [4], wherein at least a part of the polyolefin is dissolved in the composition.

[6] The composition according to any one of [1] to [5], wherein the polymerizable compound contains a monofunctional monomer (A) having an SP value of 7.8 $(cal/cm^3)^{1/2}$ or more and 9.6 $(cal/cm^3)^{1/2}$ or less.

[7] The composition according to [6], wherein the polymerizable compound further contains a monofunctional monomer (B) having an SP value of less than 7.8 $(cal/cm^3)^{1/2}$ or more than 9.6 $(cal/cm^3)^{1/2}$.

[8] The composition according to [7], wherein a mass ratio of the monofunctional monomer (A) to the monofunctional monomer (B) is 1 : 1 to 10 : 1.

[9] The composition according to any one of [1] to [8], wherein a mass ratio of the polymerizable compound to the aggregation inhibitor is 10 : 1 to 200 : 1.

[10] The composition according to any one of [1] to [9], wherein the polyolefin includes a polyethylene.

[11] The composition according to any one of [2] to [10], wherein the nanoparticles contain at least one selected from the group consisting of titanium oxide, aluminum oxide, zirconium oxide, zinc oxide, strontium titanate, lithopone, kaolinite, montmorillonite, talc, barium sulfate, calcium carbonate, silicon dioxide, tin oxide, phosphorus-containing tin oxide (PTO), antimony oxide, antimony-containing tin oxide (ATO), aluminum-containing zinc oxide (AZO), gallium-containing zinc oxide (GZO), indium oxide, and tin-containing indium oxide (ITO).

[12] The composition according to any one of [2] to [11], wherein the polymer dispersant contains a polyester polyamide having a weight average molecular weight of 1000 or more and 70000 or less.

[13] The composition according to any one of [1] to [12], comprising no colorant.

[14] The composition according to any one of [1] to [12], further comprising a colorant.

[15] The composition according to [14], wherein the colorant contains a white pigment.

[16] The composition according to any one of [1] to [15], wherein the ink composition is filled in a container.

[17] The composition according to [16], wherein a liquid contact portion in contact with the ink composition in the container contains a polyolefin.

[18] The composition according to [17], wherein the polyolefin contains a polyethylene having a degree of crystallinity of 35% or more and 55% or less.

[19] The composition according to any one of [1] to [18], wherein the ink composition is an ink composition for inkjet.

[20] An ink set comprising the composition according to [13] and/or the composition according to [14].

[21] An ink pack filled with an ink composition, wherein

in the ink pack, a liquid contact portion in contact with the ink composition contains a polyolefin, and
the ink composition contains a polymerizable compound, a polyolefin derived from the liquid contact portion of the ink pack, and a polyolefin aggregation inhibitor.

[22] The ink pack according to [21], wherein the polyolefin contains a polyethylene having a degree of crystallinity of 35% or more and 55% or less.

[23] The ink pack according to [21] or [22], wherein the ink pack is a laminate including at least one of a gas barrier layer, an adhesive layer, or a heat seal layer.

[24] The ink pack according to [23], wherein the heat seal layer contains the polyolefin according to [22].

[25] An inkjet recording method comprising: discharging the composition according to any one of [1] to [19] from an inkjet head onto a substrate; and photocuring the composition discharged onto the substrate.

EFFECTS OF THE INVENTION

The present invention can provide an ink composition having excellent storage stability.

DETAILED DESCRIPTION

Hereinafter, embodiments of the present invention will be described in detail. The scope of the present invention is not limited to the embodiments described herein, and various modifications can be made without departing from the gist of the present invention. Even if the estimation of the mechanism of action is different from the actual mode, it is included in the scope of the present invention.

<Ink composition>

The ink composition of the present invention contains a polymerizable compound, a polyolefin, and a polyolefin aggregation inhibitor.

The present inventors have found that there is a problem that, when a container including a plastic film is filled with an ink composition and stored for a long period of time, foreign matters that may cause clogging of an ink head are generated in the ink composition. As a result of further studies on the foreign matter, the present inventors have found that when the material of the innermost layer of the container is plastic, particularly polyolefin, the polyolefin is eluted and aggregated in the ink composition and is present in the composition as a foreign matter. As a result of further study by the present inventors, the present inventors consider that elution of the polyolefin into the ink composition itself is less likely to be a problem, and it is important to suppress aggregation of the eluted polyolefin. From this consideration, the present inventors have found a polyolefin aggregation inhibitor, and thus completed the present invention in which the polyolefin aggregation inhibitor is blended in the ink composition.

<Polyolefin aggregation inhibitor>

The ink composition of the present invention contains a polyolefin aggregation inhibitor (hereinafter, may be simply referred to as "aggregation inhibitor"). The aggregation inhibitor is not particularly limited as long as it is a compound capable of suppressing aggregation of the polyolefin eluted in the ink composition as described above. Specifically, the aggregation inhibitor preferably contains nanoparticles and/or a polymer dispersant. When the aggregation inhibitor contains nanoparticles and/or a polymer dispersant, aggregation of the polyolefin eluted in the ink composition can be further suppressed.

In the present invention, the nanoparticles are preferably particles having an average particle size of 1 $\mu$m or less (1000 nm or less), and more preferably inorganic particles having an average particle size of 1 $\mu$m (1000 nm) or less. Furthermore, the nanoparticles are preferably white nanoparticles having hiding power or highly transparent nanoparticles for the purpose of not affecting the hue and transparency of the color ink composition, the clear ink composition, or the primer ink composition. Specifically, the nanoparticles preferably contain at least one selected from the group consisting of titanium oxide, aluminum oxide, zirconium oxide, zinc oxide, strontium titanate, lithopone, kaolinite, montmorillonite, talc, barium sulfate, calcium carbonate, silicon dioxide, tin oxide, phosphorus-containing tin oxide (PTO), antimony oxide, antimony-containing tin oxide (ATO), aluminum-containing zinc oxide (AZO), gallium-containing zinc oxide (GZO), indium oxide, and tin-containing indium oxide (ITO). The nanoparticles more preferably contain at least one selected from the group consisting of titanium oxide, aluminum oxide, zirconium oxide, silicon dioxide, tin oxide, and zinc oxide. The nanoparticles still more preferably contain at least one of titanium oxide, silicon dioxide, and aluminum oxide. In the present invention, the average particle size may refer to a particle size obtained by observing and measuring the particle size of each primary particle separated by the grain boundary of nanoparticles with a transmission electron microscope (TEM), a scanning electron microscope (SEM), or the like, then determining the average value of major axis diameters and the average value of minor axis diameters of at least 100 particles, and further averaging the average value of the major axis diameter and the average value of the minor axis diameter.

The average particle size of the nanoparticles is preferably 800 nm or less, more preferably 500 nm or less, and still more preferably 100 nm or less. When the average particle size of the nanoparticles is equal to or less than the upper limit, the nanoparticles have a sufficiently large specific surface area, and thus can sufficiently adsorb the eluted polyolefin as described later, so that aggregation of the polyolefin can be suppressed. In addition, the specific surface area increases as the average particle size decreases, and the adsorption sites of polyolefin described later also increase accordingly. Therefore, the lower limit of the average particle size is not particularly limited, but if the particle size is too small, the particles may aggregate. Therefore, the average particle size of the nanoparticles is usually 5 nm or more, and preferably 10 nm or more. That is, the average particle size of the nanoparticles is usually 5 to 1000 nm, preferably 5 to 800 nm, more preferably 10 to 500 nm, and still more preferably 10 to

100 nm. The specific surface area of the nanoparticles is preferably 10 to 600 $m^2$/g, and more preferably 20 to 400 $m^2$/g. The specific surface area of the nanoparticles can be determined, for example, by a multipoint nitrogen adsorption method (BET method) or the like.

In the ink composition of the present invention, at least a part of the eluted polyolefin is preferably adsorbed to the nanoparticles. Although not limited to theory, it is considered that the nanoparticles described above have adsorption sites on the surface thereof, and can suppress aggregation of polyolefin by adsorbing the eluted polyolefin. In other words, the nanoparticles that can have adsorption sites on the surface thereof can be suitably used as the aggregation inhibitor of the present invention. The adsorption of the polyolefin to the nanoparticles in the ink composition can be confirmed, for example, by centrifuging the ink composition to precipitate a solid component, separating a fraction corresponding to the pigment and the nanoparticles from the precipitated solid component, and analyzing the fraction by infrared absorption spectroscopy (IR) or nuclear magnetic resonance spectroscopy (NMR). The adsorption of the polyolefin can be confirmed, for example, by the method described in Examples described later.

When the ink composition of the present invention contains nanoparticles as the aggregation inhibitor, the content of the nanoparticles is preferably 0.1 to 10 mass%, more preferably 0.2 to 7 mass%, and still more preferably 0.3 to 4 mass% based on the mass of the ink composition. When the content of the nanoparticles is within the range, the storage stability of the ink composition can be improved.

In the present invention, the polymer dispersant is preferably a compound having a weight average molecular weight ($M_w$) of 1,000 or more in which pigments that can be contained in the ink composition can be dispersed. Examples of the polymer dispersant include DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all manufactured by BYK-Chemie), EFKA4010, EFKA4046, EFKA4080, EFKA5010, EFKA5207, EFKA5244, EFKA6745, EFKA6750, EFKA7414, EFKA7462, EFKA7500, EFKA7570, EFKA7575, and EFKA7580 (all manufactured by EFKA Additives), Disperse Aid 6, Disperse Aid 8, Disperse Aid 15, and Disperse Aid 9100 (all manufactured by SAN NOPCO LIMITED), various types of Solsperse dispersants such as Solsperse 3000, 9000, 13240, 13940, 17000, 24000, 26000, 28000, 32000, 32500, 32600, 33000, 33500, 34750, 35100, 36000, 37500, 39000, 41000, and 71000 (all manufactured by Lubrizol Japan Ltd.), Adeka Pluronic L31, F38, L42, L44, L61, L64, F68, L72, P95, F77, P84, F87, P94, L101, P103, F108, L121, and P-123 (all manufactured by ADEKA CORPORATION), ISONET S-20 (manufactured by Sanyo Chemical Industries, Ltd.), DISPARLON KS-860, 873SN, 874 (polymer dispersant), #2150 (aliphatic polycarboxylic acid), and #7004 (polyether ester type) (all manufactured by Kusumoto Chemicals, Ltd.), and Uniqjet 9520 (manufactured by UNIQCHEM). The polymer dispersant may be used singly or in combination of two or more thereof. In the present invention, the weight average molecular weight ($M_w$) may mean a weight average molecular weight in terms of polystyrene measured by gel permeation chromatograph (GPC).

Among the polymer dispersants, a polymer dispersant containing a polyester polyamide having a weight average molecular weight ($M_w$) of 1,000 or more and 70,000 or less, more preferably 1,500 or more and 60,000 or less is preferable. When the polymer dispersant contains such a polyester polyamide, aggregation of the polyolefin eluted in the ink composition can be further suppressed. The polyester polyamide can be produced by reacting an acid-terminated polyester such as polycaprolactone, poly(12-hydroxystearic acid), or polyricinoleic acid with a polyamine such as polyethyleneimine or polyallylamine. Examples of such a polyester polyamide include Solsperse 32000, Solsperse 32500, Solsperse 32600, Solsperse 33000, Solsperse 33500, Solsperse 34750, Solsperse 35100, Solsperse 37500, and Uniqjet 9520.

In the ink composition of the present invention, at least a part of the eluted polyolefin is preferably dispersed in the ink composition. Although not limited to the theory, it is considered that the polymer dispersant can disperse the polyolefin in the ink composition by solubilizing, emulsifying, and suspending the polyolefin due to the development of hydrophobic interaction and entanglement of molecular chains, and thus can suppress aggregation of polyolefin. The dispersion of the polyolefin in the ink composition can be confirmed by analyzing the supernatant after centrifuging the ink composition with a dynamic light scattering particle size analyzer, IR, NMR, and the like. The dispersion of the polyolefin can be confirmed, for example, by the method described in Examples described later.

When the ink composition of the present invention contains a polymer dispersant as an aggregation inhibitor, the content of the polymer dispersant is preferably 0.1 to 10 mass%, more preferably 0.5 to 9 mass%, and still more preferably 0.7 to 8 mass% based on the mass of the ink composition. When the content of the polymer dispersant is within the range, the storage stability of the ink composition can be improved.

In a preferred embodiment of the present invention, when the ink composition of the present invention is a clear ink composition that contains no colorant described later, the aggregation inhibitor preferably contains at least one of nanoparticles or a polymer dispersant, and from the economical viewpoint, the aggregation inhibitor is more preferably composed of a polymer dispersant.

In another preferred embodiment of the present invention, the ink composition of the present invention may further contain a colorant (color ink composition). In this case, the dispersant for dispersing the colorant may constitute a part of the aggregation inhibitor of the present invention. When the ink composition of the present invention further contains a colorant, the aggregation inhibitor preferably contains both nanoparticles and a polymer dispersant. Although not limited by theory, it is considered that when only the polymer dispersant is present in the color ink composition, the polymer dispersant may preferentially disperse the colorant, and thus does not function as an aggregation inhibitor, so that polyolefin is hardly dispersed.

In a preferred embodiment of the present invention, when the ink composition of the present invention is a color ink composition described later, the mass ratio of the nanoparticles to the polymer dispersant in the composition (mass of nanoparticles : mass of polymer dispersant) can be appropriately changed depending on the type and/or amount of other components in the composition, but is preferably 0.5 : 1 to 5 : 1, and more preferably 1 : 1 to 4 : 1. When the mass ratio of the nanoparticles to the polymer dispersant in the color ink composition is within the range, the storage stability of the ink composition can be improved. When the amount of the polymer dispersant is excessively large with respect to the amount of the nanoparticles, the adsorption sites of the nanoparticles decrease, and the adsorption effect to the eluted polyolefin is weakened, so that the storage stability may deteriorate. Furthermore, the mass ratio of the colorant (for example, pigment) to the nanoparticles in the color ink composition (mass of colorant : mass of nanoparticles) can be appropriately changed according to the type and/or amount of the colorant, but is preferably 1 : 1 to 10 : 1, and more preferably 1.5 : 1 to 8 : 1. When the mass ratio of the colorant to the nanoparticles in the color ink composition is within the range, the storage stability of the ink composition can be improved.

In a preferred embodiment of the present invention, when the ink composition is a color ink composition containing a colorant and only a polymer dispersant is used as an aggregation inhibitor, the content of the polymer dispersant is preferably 10 to 300 parts by mass, more preferably 20 to 250 parts by mass, and still more preferably 30 to 200 parts by mass per 100 parts by mass of the colorant. When the content of the polymer dispersant is within the range including the upper and lower limits, the polymer dispersant is present in the color ink composition in a state of not being adsorbed to the colorant, and thus may act as an aggregation inhibitor. In addition, the viscosity of the ink composition is not too high, and the ink composition is suitable for an inkjet method accordingly.

In the present invention, at least a part of the eluted polyolefin is preferably dissolved in the ink composition. As described above, since the elution of the polyolefin itself is acceptable, all of the eluted polyolefin may be dissolved in the ink composition. The dissolution of the polyolefin in the ink composition can be confirmed by, for example, centrifuging the ink composition to precipitate a solid component and analyzing the supernatant with a dynamic light scattering particle size analyzer and IR, NMR, or the like. The dissolution of the polyolefin can also be confirmed by centrifuging the ink composition to precipitate a solid component, separating a fraction corresponding to a pigment and nanoparticles from the precipitated solid component, and analyzing the fraction with IR, NMR, or the like. The dissolution of the polyolefin can be confirmed by, for example, the method described in Examples described later.

In the present specification, the term "dissolved" may also include a state in which the eluted polyolefin is solvated with monomers or the like without aggregation, and is present as a polyolefin aggregate of, for example, several nm without adsorbing to the nanoparticles or dispersing with the dispersant.

<Polymerizable compound>

The ink composition of the present invention contains a polymerizable compound. The polymerizable compound in the present invention is preferably a compound having a function of undergoing polymerization reaction by light irradiation to cure a composition containing the polymerizable compound. Specifically, a compound having at least one ethylenic double bond selected from the group consisting of an acryloyl group, a methacryloyl group, a vinyl group, an allyl group, and a vinyl ether group is preferable. A compound having at least one ethylenic double bond selected from the group consisting of an acryloyl group, a methacryloyl group, and a vinyl ether group is more preferable.

In the present specification, the term "(meth)acrylate" is a generic term for "acrylate" and "methacrylate". The notations such as "(meth)acrylamide" and "(meth)acryloyloxy" have the same meaning. When the ink composition of the present invention contains a polymerizable compound that undergoes a polymerization reaction by ultraviolet irradiation, the ink composition is an ultraviolet curable ink composition. In addition, the polymerizable compound is preferably a radical polymerizable compound in which polymerization reaction occurs by radical polymerization.

The ink composition of the present invention preferably contains a monofunctional monomer (A) (hereinafter, may be simply referred to as "monomer (A)") having an SP value of 7.8 $(cal/cm^3)^{1/2}$ or more and 9.6 $(cal/cm^3)^{1/2}$ or less as the polymerizable compound. In the present invention, the monofunctional monomer may have one ethylenic double bond in one molecule. The SP value of the monomer (A) is preferably 8.0 $(cal/cm^3)^{1/2}$ or more, more preferably 8.2 $(cal/cm^3)^{1/2}$ or more, still more preferably 8.4 $(cal/cm^3)^{1/2}$ or more, still even more preferably 8.6 $(cal/cm^3)^{1/2}$ or more, particularly preferably 8.8 $(cal/cm^3)^{1/2}$ or more, and preferably 9.5 $(cal/cm^3)^{1/2}$ or less, more preferably 9.3 $(cal/cm^3)^{1/2}$ or less. That is, the SP value of the monomer (A) is preferably 7.8 to 9.6 $(cal/cm^3)^{1/2}$, more preferably 8.0 to 9.6 $(cal/cm^3)^{1/2}$, still more preferably 8.2 to 9.6 $(cal/cm^3)^{1/2}$, still even more preferably 8.4 to 9.5 $(cal/cm^3)^{1/2}$, particularly preferably 8.6 to 9.5 $(cal/cm^3)^{1/2}$, or 8.8 to 9.3 $(cal/cm^3)^{1/2}$. When the SP value of the monomer (A) is within the range, the storage stability of the ink composition can be improved. Furthermore, since the affinity with the plastic that can be used as a substrate is improved, so that the adhesiveness of the ink composition to the substrate can be improved.

It is known that the SP value of each monomer is determined by calculation from the molecular structure. The solubility parameter herein may mean a value at 25°C obtained by the Fedors method (Yuji Harazaki, "Basic Science of Coating" (original title: Coating no Kiso Kagaku), Chapter 3, page 35, 1977, published by Maki Shoten).

Examples of the monomer (A) include (meth)acrylates such as 2-ethylhexyl (meth)acrylate, 3,3,5-trimethylcyclohexyl (meth)acrylate, isobornyl (meth)acrylate, cyclic trimethylolpropane formal (meth)acrylate, tetrahydrofurfuryl (meth)acrylate, butyl (meth)acrylate, propyl (meth)acrylate, isobutyl (meth)acrylate, ethyl (meth)acrylate, stearyl (meth)acrylate, and lauryl (meth)acrylate; and monomers having a vinyl ether group, such as hexyl vinyl ether, phenyl vinyl ether, and cyclohexyl vinyl ether. These can be used singly or in combination of two or more.

Among the monomers (A), the ink composition preferably contains at least one selected from the group consisting of 2-ethylhexyl (meth)acrylate, 3,3,5-trimethylcyclohexyl (meth)acrylate, isobornyl (meth)acrylate, cyclic trimethylolpropane formal (meth)acrylate, and tetrahydrofurfuryl (meth)acrylate from the viewpoint of improving adhesiveness to the substrate.

The content of the monomer (A) is preferably 20 mass% or more, more preferably 30 mass% or more, still more preferably 40 mass% or more, still even more preferably 50 mass% or more, and particularly preferably 55 mass% or more, and preferably 80 mass% or less and more preferably 75 mass% or less based on the mass of the entire ink composition. That is, the content of the monomer (A) is preferably 20 to 80 mass%, more preferably 30 to 80 mass%, still more preferably 40 to 80 mass%, still even more preferably 50 to 75 mass%, and particularly preferably 55 to 75 mass% based on the mass of the entire ink composition. When the content of the monomer (A) is within the range, the storage stability of the ink composition can be further improved, and the adhesiveness to the substrate can be further improved.

The ink composition of the present invention preferably further contains a monofunctional monomer (B) (hereinafter, may be simply referred to as "monomer (B)") having an SP value of less than 7.8 $(cal/cm^3)^{1/2}$ or more than 9.6 $(cal/cm^3)^{1/2}$ as the polymerizable compound. The SP value of the monomer (B) is preferably 7.6 $(cal/cm^3)^{1/2}$ or less, more preferably 7.5 $(cal/cm^3)^{1/2}$ or less, still more preferably 7.4 $(cal/cm^3)^{1/2}$ or less, still even more preferably 7.3 $(cal/cm^3)^{1/2}$ or less, or preferably 9.8 $(cal/cm^3)^{1/2}$ or more, more preferably 10.0 $(cal/cm^3)^{1/2}$ or more, still more preferably 10.2 $(cal/cm^3)^{1/2}$ or more, still even more preferably 10.5 $(cal/cm^3)^{1/2}$ or more, particularly preferably 11.0 $(cal/cm^3)^{1/2}$ or more. When the SP value of the monomer (B) is within the range, the affinity with the plastic that may be contained in the innermost layer of the container may be reduced, so that the storage stability of the ink composition can be improved.

Examples of the monomer having an SP value of less than 7.8 $(cal/cm^3)^{1/2}$ include monomers such as isobutyl vinyl ether and n-butyl vinyl ether. Examples of the monomer having an SP value of more than 9.6 $(cal/cm^3)^{1/2}$ include dicyclopentanyl (meth)acrylate, phenoxydiethylene glycol (meth)acrylate, 2-phenoxyethyl (meth)acrylate, benzyl (meth)acrylate, N-vinyl-2-caprolactam, acryloylmorpholine, ω-carboxy-polycaprolactone mono (meth)acrylate, and 2-hydroxy-3-phenoxypropyl (meth)acrylate. These can be used singly or in combination of two or more thereof. In addition, in the case of combining two or more these monomers, two or more monomers having an SP value of less than 7.8 $(cal/cm^3)^{1/2}$ may be combined, two or more monomers having an SP value of more than 9.6 $(cal/cm^3)^{1/2}$ may be combined, or one or more monomers having an SP value of less than 7.8 $(cal/cm^3)^{1/2}$ and one or more monomers having an SP value of more than 9.6 $(cal/cm^3)^{1/2}$ may be combined.

Among the monomers (B), from the viewpoint of improving the storage stability of the ink composition, the ink composition preferably contains at least one selected from the group consisting of 2-phenoxyethyl (meth)acrylate, 2-hydroxy-3-phenoxypropyl (meth)acrylate, and benzyl (meth)acrylate.

The content of the monomer (B) is preferably 5 mass% or more, more preferably 10 mass% or more, and preferably 30 mass% or less, more preferably 25 mass% or less based on the mass of the entire ink composition. That is, the content of the monomer (B) is preferably 5 to 30 mass%, and more preferably 10 to 25 mass% based on the mass of the entire ink composition. When the content of the monomer (B) is within the range, the storage stability of the ink composition can be further improved.

In the ink composition of the present invention, the ratio of the mass of the monomer (A) to the mass of the monomer (B) (mass of monomer (A) : mass of monomer (B)) is preferably 1 : 1 to 10 : 1, more preferably 4 : 1 to 10 : 1, still more preferably 4.8 : 1 to 10 : 1, and still even more preferably 6 : 1 to 10 : 1. When the ratio of the mass of the monomer (A) to the mass of the monomer (B) is within the range, the storage stability of the ink composition and the adhesiveness to the substrate can be improved.

The ink composition of the present invention may contain a polyfunctional monomer as a polymerizable compound in addition to the monofunctional monomers (A) and (B) described above. In the present invention, the polyfunctional monomer may refer to a compound having two or more ethylenic double bonds in one molecule. The polyfunctional monomer is not particularly limited, but preferred examples thereof include difunctional (meth)acrylate monomers such as 1,6-hexanediol di(meth)acrylate, tricyclodecanedimethanol di(meth)acrylate, triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,9-nonanediol di(meth)acrylate, neopentyl glycol di(meth)acrylate, dimethylol-tricyclodecane di(meth)acrylate, PO adduct of bisphenol A di(meth)acrylate, hydroxypivalic acid neopentyl glycol di(meth)acrylate, and polytetramethylene glycol di(meth)acrylate; trifunctional or higher functional polyfunctional (meth)acrylate monomers such as pentaerythritol tri(meth)acrylate, trimethylolpropane tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate; and polyfunctional monomers having a vinyl group such as polyfunctional monomers having a vinyl ether group, such as ethylene glycol divinyl ether, diethylene glycol divinyl ether, triethylene glycol divinyl ether, propylene glycol divinyl ether, dipropylene glycol vinyl ether, butylene divinyl ether, dibutylene glycol divinyl ether, neopentyl glycol divinyl ether, cyclohexane diol divinyl ether, cyclohexane dimethanol divinyl ether, norbornyl dimethanol divinyl ether, isobinyl divinyl ether, divinyl resorcin, divinyl hydroquinone, glycerin trivinyl ether, glycerin ethylene oxide adduct trivinyl ether (number of moles of ethylene oxide added: 6), trimethylolpropane trivinyl ether, trivinyl ether ethylene oxide adduct trivinyl ether (number of moles of ethylene oxide added: 3), pentaerythritol trivinyl ether, and ditrimethylolpropane hexavinyl ether. These can be used singly or in combination of two or more thereof. When the ink composition of the present invention contains a polyfunctional monomer, the storage stability of the composition can be improved, and the strength of the printed matter can be improved. The content of the polyfunctional monomer is preferably 5 mass% or more, more preferably 10 mass% or more, still more preferably 15 mass% or more, still even more preferably 20 mass% or more, and preferably 40 mass% or less, more preferably 30 mass% or less based on the mass of the entire ink composition. That is, the content of the polyfunctional monomer is preferably 5 to 40 mass%, more preferably 10 to 40 mass%, still more preferably 15 to 30 mass%, and still even more preferably 20 to 30 mass% based on the mass of the entire ink composition. When the content of the polyfunctional monomer is within the range, the storage stability of the composition can be further improved, and the strength of the printed matter can be further improved.

The SP value of the polyfunctional monomer is preferably 7.5 $(cal/cm^3)^{1/2}$ or more, more preferably 7.7 $(cal/cm^3)^{1/2}$ or more, still more preferably 7.8 $(cal/cm^3)^{1/2}$ or more, and preferably 12.0 $(cal/cm^3)^{1/2}$ or less, more preferably 11.0 $(cal/cm^3)^{1/2}$ or less, still more preferably 10.0 $(cal/cm^3)^{1/2}$ or less. That is, the SP value of the polyfunctional monomer is preferably 7.5 to 12.0 $(cal/cm^3)^{1/2}$, more preferably 7.7 to 11.0 $(cal/cm^3)^{1/2}$, and still more preferably 7.8 to 10.0 $(cal/cm^3)^{1/2}$. When the SP value of the polyfunctional monomer is within the range, the storage stability of the ink composition can be improved.

The ink composition of the present invention may contain a polymerizable compound other than the monofunctional monomer (A), the monofunctional monomer (B), and the polyfunctional monomer described above. Examples of such a polymerizable compound include oligomers. The oligomer is a component having a property of being polymerized and cured by irradiation with an active energy ray.

The term "oligomer" may refer to an oligomer having a weight average molecular weight of 500 to 10,000. The weight average molecular weight of the oligomer is preferably 800 or more, more preferably more than 1,000. The weight average molecular weight can be measured in terms of polystyrene measured by gel permeation chromatograph (GPC). The oligomer may be used singly or in combination of two or more thereof.

Examples of the oligomer include an epoxy (meth)acrylate oligomer, a polyester (meth)acrylate oligomer, a urethane (meth)acrylate oligomer, and a polyether (meth)acrylate oligomer.

When the ink composition of the present invention contains an oligomer, the content thereof is preferably 0.1 to 30 mass%, and more preferably 0.5 to 20 mass% based on the total mass of the ink composition. When the content of the oligomer is within the range, the storage stability of the ink composition can be improved.

In the ink composition of the present invention, the ratio of the mass of the polymerizable compound to the mass of the aggregation inhibitor (mass of polymerizable compound : mass of aggregation inhibitor) is preferably 10 : 1 to 200 : 1, more preferably 30 : 1 to 200 : 1, still more preferably 50 : 1 to 200 : 1, still even more preferably 80 : 1 to 200 : 1, and particularly preferably 100 : 1 to 200 : 1. When the ratio of the mass of the polymerizable compound to the mass of the aggregation inhibitor is within the range, the storage stability of the ink composition can be improved.

The content of the polymerizable compound in the ink composition of the present invention is preferably 30 mass% or more, more preferably 40 mass% or more, still more preferably 45 mass% or more, and preferably 90 mass% or less, more preferably 89 mass% or less, still more preferably 85 mass% or less based on the total mass of the ink composition. That is, the content of the polymerizable compound in the ink composition of the present invention is preferably 30 to 90 mass%, more preferably 40 to 89 mass%, and still more preferably 45 to 85 mass% based on the total mass of the ink.

<Polyolefin>

The ink composition of the present invention contains a polyolefin. In the present invention, the polyolefin preferably includes at least one selected from the group consisting of polyethylene, polypropylene, and polybutylene, and more preferably includes polyethylene. The ink composition may contain one polyolefin alone, or two or more polyolefins.

The polyolefin forming the container described later generally has a weight average molecular weight of about 20,000 to about 300,000, but the weight average molecular weight of the polyolefin contained in the ink composition is usually about 10,000 to about 50,000. The weight average molecular weight of the polyolefin can be measured in terms of polystyrene by, for example, gel permeation chromatograph (GPC).

The ink composition of the present invention is preferably filled in a container. The form of the container is not particularly limited, and may be, for example, a cartridge, a bottle, a tank, or a pouch. Furthermore, the configuration of the container is not particularly limited.

In the present invention, the polyolefin contained in the ink composition is preferably derived from the polyolefin contained in the liquid contact portion in contact with the ink composition in the container to be filled with the ink composition. In other words, the ink composition of the present invention is preferably filled in a container containing polyolefin in the liquid contact portion. The polyolefin contained in the ink composition of the present invention may be contained in the ink composition by storing the ink composition under the conditions of, for example, at room temperature for 1 year in a normal use environment, at 30°C to 50°C for 60 to 240 days, at 60°C for 30 days, or at 70°C for 4 days after production. The ink composition before being filled in the container immediately after production is not necessarily required to contain polyolefin. Therefore, an embodiment of the present invention may also include an ink composition containing a polymerizable compound and a polyolefin aggregation inhibitor.

In the container to be filled with the ink composition of the present invention, the polyolefin contained in the liquid contact portion in the container is preferably selected from the group consisting of polyethylene, polypropylene, and polybutylene, and more preferably polyethylene from the viewpoint of the heat-sealability of the container. The liquid contact portion in the container may contain one polyolefin alone, or two or more polyolefins.

In the present invention, the degree of crystallinity of the polyethylene is preferably 35% or more, more preferably 40% or more, and preferably 55% or less, more preferably 50% or less. That is, the degree of crystallinity of the polyethylene is preferably 35 to 55%, and more preferably 40 to 50%. A polyethylene having a degree of crystallinity within the range is likely to be heat-sealed, so that the sealability of the container is improved, and the storage stability of the ink composition can be improved. The degree of crystallinity of the polyethylene can be adjusted within the range by appropriately adjusting, for example, the type of monomer to be used at the time of polymerization, the type of polymerization catalyst, and polymerization conditions (for example, pressure at the time of polymerization). The degree of crystallinity of the polyethylene can be determined using, for example, X-ray diffraction (XRD). In the present invention, the polyethylene is preferably linear low density polyethylene (LLDPE), low density polyethylene (LDPE), very low density polyethylene (VLDPE), high density polyethylene (HDPE), and ultra high molecular weight polyethylene (UHMW-PE), and more preferably linear low density polyethylene (LLDPE). The melting point of the polyethylene is preferably 120°C or higher and 140°C or lower. When the melting point of the polyethylene is within the range, the storage stability of the ink composition is improved, and the sealability of the container can be improved. The melting point of the polyethylene can be determined using, for example, a differential scanning calorimeter (DSC).

In an embodiment in which the container to be filled with the ink composition of the present invention is a pouch, the layer configuration of the pouch is not particularly limited as long as the innermost layer is a polyolefin layer. The pouch may have a layer configuration of, for example, a resin layer such as PET layer, a metal layer such as an aluminum layer, a resin layer such as a nylon layer, and a polyolefin layer from the outermost layer. The thickness of each layer can be appropriately adjusted according to the application. The thickness of the layer other than the polyolefin layer is usually 5 to 30 $\mu$m, preferably 10 to 20 $\mu$m, and the thickness of the polyolefin layer is usually 20 to 70 $\mu$m, preferably 30 to 60 $\mu$m. The thickness of each layer can be measured with, for example, a contact type thickness meter. In addition, the layers may be bonded to each other with an adhesive or a pressure-sensitive adhesive. The type and thickness of the adhesive can be appropriately selected according to the application.

<Other additives>

The ink composition of the present invention may contain other additives as necessary as long as the effect of the present invention is not impaired. Examples of other additives include polymerization initiators, surface conditioners, polymerization inhibitors, photosensitizers, co-sensitizers, storage stabilizers, preservative stabilizers, antioxidants, colorants, ultraviolet absorbers, light stabilizers, chain transfer agents, conductive salts, fillers, organic solvents, diluent solvents, and thickeners.

The polymerization initiator is a compound capable of generating reactive active species by contribution of heat or light and initiating a polymerization reaction of the polymerizable compound contained in the ink composition. Examples of the reactive active species include active species such as radicals, cations, or anions. Among them, a photopolymerization initiator that generates radicals by light irradiation is preferable from the viewpoint of ease of reaction control.

Examples of the photopolymerization initiator include, but are not limited to, benzoin compounds having 14 to 18 carbon atoms [for example, benzoin, benzoin methyl ether, benzoin ethyl ether, benzoin propyl ether, and benzoin isobutyl ether]; acetophenone compounds having 8 to 18 carbon atoms [for example, acetophenone, 2,2-diethoxy-2-phenylacetophenone, 2,2-diethoxy-2-phenylacetophenone, 1,1-dichloroacetophenone, 2-hydroxy-2-methyl-phenylpropan-1-one, diethoxyacetophenone, 1-hydroxycyclohexylphenyl ketone, and 2-methyl-1-[4-(methylthio)phenyl]-2-morpholinopropan-1-one]; anthraquinone compounds having 14 to 19 carbon atoms [for example, 2-ethylanthraquinone, 2-t-butylanthraquinone, 2-chloroanthraquinone, and 2-amylanthraquinone]; thioxanthone compounds having 13 to 17 carbon atoms [for example, 2,4-diethylthioxanthone, 2-isopropylthioxanthone, and 2-chlorothioxanthone]; ketal compounds having 16 to 17 carbon atoms [for example, acetophenone dimethyl ketal and benzyl dimethyl ketal]; benzophenone compounds having 13 to 21 carbon atoms [for example, benzophenone, 4-benzoyl-4'-methyldiphenylsulfide, and 4,4'-bismethylaminobenzophenone]; acylphosphine oxide compounds having 22 to 28 carbon atoms [for example, 2,4,6-trimethylbenzoyl-diphenyl-phosphine oxide, bis-(2,6-dimethoxybenzoyl)-2,4,4-trimethylpentylphosphine oxide, and bis(2,4,6-trimethylbenzoyl)-phenylphosphine oxide]; and mixtures of these compounds. These may be used singly or in combination of two or more thereof. Among them, from the viewpoint of curability, the ink composition of the present invention preferably contains at least one selected from an acetophenone compound and an acylphosphine oxide compound. The ink composition preferably contains 1-hydroxycyclohexyl phenyl ketone, 2,4,6-trimethylbenzoyl-diphenyl-phosphine oxide, 2-methyl-1-[4-(methylthio)phenyl]-2-morpholinopropan-1-one, and the like. As the photopolymerization initiator, a commercially available product may be used, and examples thereof include DAROCUR TPO manufactured by BASF SE, Omnirad 184 and Omnirad 907 manufactured by IGM Resins.

The content of the photopolymerization initiator in the ink composition of the present invention is preferably 5 mass% or more, more preferably 8 mass% or more, still more preferably 10 mass% or more, and preferably 20 mass% or less, more preferably 15 mass% or less based on the mass of the entire ink composition. That is, the content of the photopolymerization initiator in the ink composition of the present invention is preferably 5 to 20 mass%, more preferably 8 to 20 mass%, and still more preferably 10 to 15 mass% based on the mass of the entire ink composition. When the content of the photopolymerization initiator is within the range, the amount of unreacted monomer components and the amount of the photopolymerization initiator remaining undissolved can be reduced, so that the storage stability of the ink composition can be improved.

The photosensitizer is a compound that absorbs a specific active energy ray to promote the decomposition of the polymerization initiator, and can further promote the polymerization reaction of the polymerizable compound.

Examples of the photosensitizer include polynuclear aromatics (for example, pyrene, perylene, triphenylene, and 2-ethyl-9,10-dimethoxyanthracene), xanthenes (for example, fluorescein, eosin, erythrosin, rhodamine B, and rose bengal), cyanines (for example, thiacarbocyanine and oxacarbocyanine), merocyanines (for example, merocyanine and carbomerocyanine), thiazines (for example, thionine, methylene blue, and toluidine blue), acridines (for example, acridine orange, chloroflavin, and acriflavine), anthraquinones (for example, anthraquinone), squaryliums (for example, squarylium), coumarins (for example, 7-diethylamino-4-methylcoumarin), thioxanthones (for example, isopropylthioxanthone), and thiochromanones (for example, thiochromanone). Among them, the photosensitizer is preferably a thioxanthone, and more preferably isopropylthioxanthone. The sensitizer may be used singly or in combination of two or more thereof.

When the ink composition contains a photosensitizer, the content thereof is preferably 0.1 to 5 mass% and more preferably 0.5 to 4 mass% with respect to the total mass of the ink composition. When the content of the photosensitizer is within the range, the curability and curing rate of the ink composition can be improved.

The polymerization inhibitor is for suppressing excessive polymerization at a temperature at which the ink composition is discharged. The polymerization inhibitor can enhance the storability of the ink composition and improve the discharge stability of the ink composition from the inkjet head.

Examples of the polymerization inhibitor include nitroso-based polymerization inhibitors, hydroquinone, methoxyhydroquinone, benzoquinone, p-methoxyphenol, 2,2,6,6-tetramethylpiperidine-1-oxyl (TEMPO), 4-hydroxy-2,2,6,6-tetramethyl-piperidine-1-oxyl [TEMPOL (HO-TEMPO)], Cupferron Al, and hindered amine.

The content of the polymerization inhibitor is generally preferably 0.001 to 1.5 mass%, and more preferably 0.01 to 1.0 mass% with respect to the total mass of the ink composition. When the content of the polymerization inhibitor is within the range, the storability of the ink composition can be further enhanced, and the discharge stability of the ink composition from the inkjet head can be further improved.

The surface conditioner is for improving wettability to a recording medium and preventing cissing.

Examples of the surface conditioner include anionic surface conditioners such as dialkyl sulfosuccinates, alkyl naphthalene sulfonates, and fatty acid salts; nonionic surface conditioners such as polyoxyethylene alkyl ethers, polyoxyethylene alkyl allyl ethers, acetylene glycols, and polyoxyethylene-polyoxypropylene block copolymers; cationic surface conditioners such as alkylamine salts and quaternary ammonium salts; silicone-based surface conditioners; and fluorine-based surface conditioners.

The content of the surface conditioner is appropriately selected depending on the purpose of use, and is generally preferably 0.0001 to 1 mass% and more preferably 0.001 to 0.5 mass% with respect to the total mass of the ink composition. The surface tension of the ink composition can be adjusted by adjusting the amount of the surface conditioner added within the range as necessary.

In one embodiment of the present invention, the ink composition of the present invention preferably contains a colorant (color ink composition). In another embodiment, the ink composition of the present invention preferably contains no colorant (clear ink composition). In the present invention, the clear ink composition may not contain a colorant, or may contain only a small amount of a pigment and/or a dye such as a bluing agent. When the ink composition of the present invention is a clear ink composition, the content of the colorant is usually 0.1 mass% or less, more preferably 0.05 mass% or less, and the lower limit thereof is 0 mass% based on the total mass of the ink composition. That is, the content of the colorant in the clear ink composition is usually 0 to 0.1 mass%, and more preferably 0 to 0.05 mass% based on the total mass of the ink composition.

When the ink composition is a color ink composition containing a colorant, the configuration thereof is not particularly limited, but the color ink composition preferably contains at least one selected from the group consisting of cyan, magenta, yellow, white, and black. In some cases, violet, blue, green, orange, red, and the like can also be used. In a preferred embodiment of the present invention, the colorant preferably contains a white pigment from the viewpoint of further suppressing aggregation of polyolefin by combination with an aggregation inhibitor.

The colorant is not particularly limited, and can be appropriately selected from publicly-known water-soluble dyes, oil-soluble dyes, pigments, and the like. Since the ink composition of the present invention is nonaqueous, the colorant is preferably an oil-soluble dye or pigment that is easily uniformly dispersed and dissolved in a non-water-soluble medium, and it is particularly preferable to use a pigment.

The pigment to be used may be an organic pigment or an inorganic pigment.

Preferred examples of the black pigment include carbon black pigments.

In addition, pigments of black and three primary colors of cyan, magenta, and yellow are generally used, but other hues, for example, metallic glossy pigments such as gold and silver, and extender pigments of colorless or light colors can also be used according to the purpose.

Examples of a pigment exhibiting a magenta color include monoazo-based pigments such as C.I. Pigment Red 3 (Toluidine Red and the like); disazo-based pigments such as C.I. Pigment Red 38 (Pyrazolone Red B and the like); azo lake pigments such as C.I. Pigment Red 53:1 (Lake Red C and the like) and C.I. Pigment

Red 57:1 (Brilliant Carmine 6B); condensed azo pigments such as C.I. Pigment Red 144 (Condensed Azo Red BR and the like); perinone pigments such as C.I. Pigment Red 194 (Perinone Red and the like); perylene pigments such as C.I. Pigment Red 149 (Perylene Scarlet and the like); quinacridone pigments such as C.I. Pigment Violet 19 (unsubstituted quinacridone, CINQUASIA Magenta RT-355T; manufactured by Ciba Specialty Chemicals), C.I. Pigment Red 122 (dimethyl quinacridone), and C.I. Pigment Red 202 (dichloroquinacridone); isoindolinone pigments such as C.I. Pigment Red 180 (Isoindolinone Red 2BLT and the like); and alizarin lake pigments such as C.I. Pigment Red 83 (Madder Lake and the like).

Examples of a pigment exhibiting a cyan color include disazo-based pigments such as C.I. Pigment Blue 25 (Dianisidine Blue and the like); phthalocyanine pigments such as C.I. Pigment Blue 15, C.I. Pigment Blue 15:3 (IRGALITE BLUE GLO; manufactured by Ciba Specialty Chemicals), and C.I. Pigment Blue 15:4; acid dye lake pigments such as C.I.

Pigment Blue 24 (Peacock Blue Lake and the like); and alkali blue pigments such as C.I. Pigment Blue 18 (Alkali Blue V-5:1).

Examples of a pigment exhibiting a yellow color include monoazo-based pigments such as C.I. Pigment Yellow 1 (Fast Yellow G, and the like) and C.I. Pigment Yellow 74; disazo pigments such as C.I. Pigment Yellow 12 (Disazi Yellow AAA and the like) and C.I. Pigment Yellow 17; non-benzidine-based azo pigments such as C.I. Pigment Yellow 180 and C.I. Pigment Yellow 200 (Novoperm Yellow 2HG); azo lake pigments such as C.I. Pigment Yellow 100 (Tartrazine Yellow Lake and the like); condensed azo pigments such as C.I. Pigment Yellow 95 (Condensed Azo Yellow GR and the like); acid dye lake pigments such as C.I. Pigment Yellow 115 (Quinoline Yellow Lake and the like); basic dye lake pigments such as C.I. Pigment Yellow 18 (Thioflavin Lake and the like); anthraquinone-based pigments such as Flavanthrone Yellow (Y-24); isoindolinone pigments such as Isoindolinone Yellow 3RLT (Y-110); quinophthalone pigments such as Quinophthalone Yellow (Y-138); isoindoline pigments such as Isoindoline Yellow (Y-139); nitroso pigments such as C.I. Pigment Yellow 153 (Nickel Nitroso Yellow and the like); metal complex salt azo pigments such as C.I. Pigment Yellow 150 (nickel complex salt); and metal complex salt azomethine pigments such as C.I. Pigment Yellow 117 (Copper Azomethine Yellow and the like).

Examples of a pigment exhibiting a black color include carbon black, titanium black, and aniline black. An example of the carbon black is SPECIAL BLACK 250 (manufactured by Degussa AG).

Examples of a white pigment include C.I. Pigment White 6, 18, and 21. As the specific Examples of the white pigment, basic lead carbonate ($2PbCO_3Pb(OH)_2$, so-called Silver White), zinc oxide (ZnO, so-called Zinc White), titanium oxide ($TiO_2$, so-called Titanium White), and strontium titanate ($SrTiO_3$, so-called Titanium Strontium White) can be used. Titanium oxide has a smaller specific gravity than other white pigments, has a large refractive index, and is chemically and physically stable. Thus, titanium oxide has a large hiding power and coloring power as a pigment, and is also excellent in durability against acids, alkalis, and other environments. Therefore, it is preferable to use titanium oxide as the white pigment. Other white pigments (which may be other than the listed white pigments) may be used as necessary.

The average particle size of the white pigment is preferably 100 to 500 nm from the viewpoint of the effect of improving hiding power. The average particle size of the nanoparticles as the polyolefin aggregation inhibitor is preferably 5 to 100 nm.

In a preferred embodiment of the present invention, in the ink composition containing a white pigment, nanoparticles are preferably used as a polyolefin aggregation inhibitor. When nanoparticles having average particle sizes and/or specific surface areas different from those of the white pigment are present in the ink composition, aggregation of polyolefin can be further suppressed.

Among these publicly-known pigments, the pigment exhibiting a cyan color is preferably Pigment Blue 15:3 or Pigment Blue 15:4, the pigment exhibiting a magenta color is preferably Pigment Red 122, Pigment Red 202 or Pigment Violet 19, and the pigment exhibiting a yellow color is more preferably Pigment Yellow 150, Pigment Yellow 180 or Pigment Yellow 155. The pigment exhibiting a white color is preferably titanium oxide.

For example, the following pigments can be used as custom pigments such as violet, blue, green, orange, and red which are used as necessary for forming an image excellent in color reproducibility.

Examples of a commercially available pigment exhibiting a violet color include C.I. Pigment Violet 1 (Rhodamine B), C.I. Pigment Violet 2 (Rhodamine 3B), C.I. Pigment Violet 3 (Methyl Violet Lake), C.I. Pigment Violet 3:1 (Methyl Violet Lake), C.I. Pigment Violet 3:3 (Methyl Violet Lake), C.I. Pigment Violet 5:1 (Alizarin Maroon), C.I. Pigment Violet 13 (Ultramarine Pink), C.I. Pigment Violet 17 (Naphthol AS), C.I. Pigment Violet 23 (Dioxazine Violet), C.I. Pigment Violet 25 (Naphthol AS), C.I. Pigment Violet 29 (Perylene Violet), C.I. Pigment Violet 31 (Violanthrone Violet), C.I. Pigment Violet 32 (Benzimidazolone Bordeaux HF3R), C.I. Pigment Violet 36 (Thioindigo), C.I. Pigment Violet 37 (Dioxazine Violet), C.I. Pigment Violet 42 (Quinacridone Maroon B), and C.I. Pigment Violet 50 (Naphthol AS).

Examples of a commercially available pigment exhibiting a blue color include C.I. Pigment Blue 1, C.I. Pigment Blue 2, C.I. Pigment Blue 16, C.I. Pigment Blue 22, C.I. Pigment Blue 60, and C.I. Pigment Blue 66.

Examples of a commercially available pigment exhibiting a green color include C.I. Pigment Green 1 (Brilliant Green Lake), C.I. Pigment Green 4 (Malachite Green Lake), C.I. Pigment Green 7 (Phthalocyanine Green), C.I. Pigment Green 8 (Pigment Green B), C.I. Pigment Green 10 (Nickel Azo Yellow), and C.I. Pigment Green 36 (Brominated Phthalocyanine Green).

Examples of a commercially available pigment exhibiting an orange color include C.I. Pigment Orange 1 (Hansa Yellow 3R), C.I. Pigment Orange 2 (Orthonitro Orange), C.I. Pigment Orange 3 ($\beta$-naphthol), C.I. Pigment Orange 4 (Naphthol AS), C.I. Pigment Orange 5 ($\beta$-naphthol), C.I. Pigment Orange 13 (Pyrazolone Orange G), C.I. Pigment Orange 15 (Disazo Orange), C.I. Pigment Orange 16 (Anisidine Orange), C.I. Pigment Orange 17 (Persian Orange Lake), C.I. Pigment Orange 19 (Naphthalene Yellow Lake), C.I. Pigment Orange 24 (Naphthol Orange Y), C.I. Pigment Orange 31 (Condensed Azo Orange), C.I. Pigment Orange 34 (Disazopyrazolone Orange), C.I. Pigment Orange 36 (Benzimidazolone Orange HL), C.I. Pigment Orange 38 (Naphthol Orange), C.I. Pigment Orange 40 (Pyranthrone Orange), C.I. Pigment Orange 43 (Perinone Orange), C.I. Pigment Orange 46 (Ethyl Red Lake C), C.I. Pigment Orange 48 (Quinacridone Gold), C.I. Pigment Orange 49 (Quinacridone Gold), C.I. Pigment Orange 51 (Pyranthrone Orange), C.I. Pigment Orange 60 (Imidazolone Orange HGL), C.I. Pigment Orange 61 (Isoindolinone Orange), C.I. Pigment Orange 62 (Benzimidazolone Orange H5G), C.I. Pigment Orange 64 (Benzimidazolone), C.I. Pigment Orange 65 (Azomethine Orange), C.I. Pigment Orange 66 (Isoindoli Orange), C.I. Pigment Orange 67 (Pyrazoloquinazolone Orange), C.I. Pigment Orange 68 (Azomethine Orange), C.I. Pigment Orange 69 (Isoindolinone Orange), C.I. Pigment Orange 71 (Diketopyrrolopyrrole Orange), C.I. Pigment Orange 72 (Imidazolone Orange H4GL), C.I. Pigment Orange 73 (Diketopyrrolopyrrole Orange), C.I. Pigment Orange 74 (Naphthol Orange 2RLD), and C.I. Pigment Orange 81 (Diketopyrrolopyrrole Orange).

Examples of a commercially available pigment exhibiting a red color include C.I. Pigment Red 171, C.I. Pigment Red 175, C.I. Pigment Red 176, C.I. Pigment Red 177, C.I. Pigment Red 209, C.I. Pigment Red 220, C.I. Pigment Red 224, C.I. Pigment Red 242, C.I. Pigment Red 254, C.I. Pigment Red 255, C.I. Pigment Red 264, and C.I. Pigment Red 270.

Among them, from the viewpoint of color reproducibility, light resistance, and stability of the pigment dispersion, C.I. Pigment Violet 23 is preferable as a pigment exhibiting a violet color, C.I. Pigment Orange 36 and C.I. Pigment Orange 71 are preferable as a pigment exhibiting an orange color, and C.I. Pigment Green 7 and C.I. Pigment Green 36 are preferable as a pigment exhibiting a green color.

As the dispersion average particle size of the colorant to be used is finer, the colorant has a better color developing property. Therefore, the dispersion average particle size of the colorant is preferably 0.01 $\mu$m or more and 0.4 $\mu$m or less, and more preferably 0.02 $\mu$m or more and 0.2 $\mu$m or less. It is preferable to select a colorant, a dispersant, and a dispersion medium, set dispersion conditions, classification conditions, and filtration conditions such that the maximum dispersion particle size is preferably 3 $\mu$m or less, and more preferably 1 $\mu$m or less. By controlling the dispersion particle size, clogging of the head nozzle can be suppressed, and discharge stability of the ink composition can be maintained.

The dispersion particle size of the colorant can be measured by a publicly-known measurement method. Specifically, the dispersion particle size can be measured by, for example, a particle size analyzer according to a centrifugal sedimentation light transmission method, an X-ray transmission method, a laser diffraction/scattering method, or a dynamic light scattering method.

The content of the colorant in the ink composition is appropriately selected depending on the color and intended use, but is preferably 0.2 to 30 mass% and more preferably 0.5 to 20 mass% with respect to the total mass of the ink composition from the viewpoint of image density and storage stability.

When a pigment is used as the colorant, a pigment derivative and a pigment dispersant other than the polymer dispersant may be further used in order to improve the dispersibility of the pigment.

Examples of the pigment derivative include pigment derivatives having a dialkylaminoalkyl group and pigment derivatives having a dialkylaminoalkylsulfonic acid amide group.

Examples of the pigment dispersant other than the polymer dispersant include ionic or nonionic surfactants having a weight average molecular weight of 1000 or less.

The contents of the pigment derivative and the pigment dispersant other than the polymer dispersant in the ink composition are each preferably 0.05 to 5 mass% with respect to the entire ink composition.

The method for producing the ink composition of the present invention is not particularly limited, and for example, the ink composition can be produced by uniformly mixing components constituting the ink composition using a mixing and stirring device, a disperser, or the like.

In the present invention, the aggregation inhibitor is preferably uniformly dispersed in the ink composition from the viewpoint of the storage stability of the ink composition. Therefore, as a method of uniformly mixing the components constituting the ink composition, for example, a method of separately preparing a dispersion of the pigment particles and a dispersion of the aggregation inhibitor and then mixing these dispersions is preferable in order to suppress aggregation of the pigment particles and the aggregation inhibitor during the dispersion treatment. Furthermore, in the dispersion treatment, it is preferable to select a disperser and optimize dispersion conditions so as not to break crystals of primary particles as much as possible.

The ink composition of the present invention is preferably applied onto a recording medium by an inkjet method. That is, the ink composition of the present invention is preferably an ink composition for inkjet. Therefore, it is preferable that the physical properties of the ink composition are adapted to the inkjet method.

Specifically, the viscosity of the ink composition of the present invention at 25°C is preferably 50 mPa · s or less, more preferably 40 mPa · s or less, and still more preferably 30 mPa · s or less. When the viscosity is equal to or less than the upper limit, the ink composition can be appropriately discharged from the ink head even at the time of high-speed discharging. The lower limit of the viscosity of the ink composition is not particularly limited, but is usually about 3.0 mPa · s. That is, the viscosity of the ink composition of the present invention at 25°C is preferably 3 to 50 mPa · s, more preferably 3 to 40 mPa · s, and still more preferably 3 to 30 mPa · s. The viscosity can be adjusted within the range by appropriately adjusting, for example, the type and/or amount of the polymerizable compound; and the type and/or amount of the photopolymerization initiator. The viscosity can be measured using, for example, a viscometer, and can be measured by the method described in Examples.

The surface tension of the ink composition of the present invention is preferably 20 mN/m or more, more preferably 25 mN/m or more, and preferably 35 mN/m or less, more preferably 32 mN/m or less. That is, the surface tension of the ink composition of the present invention is preferably 20 to 35 mN/m, and more preferably 25 to 32 mN/m. When the surface tension of the ink composition is equal to or more than the lower limit and equal to or less than the upper limit, the droplets discharged from the nozzle can be normally formed even at the time of high-speed discharging, and thus an image can be appropriately drawn. The surface tension can be adjusted within the range by appropriately adjusting, for example, the type and/or amount of the polymerizable compound; and the type and/or amount of the surface conditioner. The surface tension can be measured using, for example, a surface tensiometer.

<Ink set>

The present invention encompasses an ink set including an ink composition containing a colorant (color ink composition) and/or an ink composition containing no colorant (clear ink composition). In an embodiment of the present invention, the ink set preferably includes a color ink composition of a plurality of colors (for example, cyan, magenta, yellow, black, and white), or includes a color ink composition of a plurality of colors and a clear ink composition.

The ink set of the present invention may include a primer ink composition in addition to the color ink composition and/or the clear ink composition as necessary.

The primer ink is disposed between a recording medium and an image recorded with the ink composition. The primer ink can improve adhesion and durability of the image recorded with the ink composition of the present invention.

The primer ink composition used with the ink set of the present invention is not particularly limited, and a publicly-known primer ink composition used in a conventional inkjet method can be used. Specifically, the primer ink composition contains at least one polymerizable compound and, as necessary, a polymerization initiator, a polymerization inhibitor, a surface conditioner, other additives, and the like. As the polymerizable compound used in the primer ink composition, a (meth)acrylate is preferred from the viewpoint of adhesion, and it is more preferred to mainly use a monofunctional (meth) acrylate.

<Ink pack>

The present invention includes an ink pack filled with an ink composition, wherein in the ink pack, a liquid contact portion in contact with the composition contains a polyolefin, and the ink composition contains a polymerizable compound, a polyolefin derived from the liquid contact portion of the ink pack, and a polyolefin aggregation inhibitor.

The ink pack of the present invention according to this embodiment includes the ink composition containing a polyolefin aggregation inhibitor, so that aggregation of the polyolefin can be inhibited even if the polyolefin is eluted into the ink composition from the liquid contact portion of the ink pack. The ink composition and the polyolefin contained in the ink pack of the present invention are preferably the same as the ink composition and the polyolefin described in the sections <Ink composition> and <Polyolefin>.

Therefore, in the ink pack of the present invention, the degree of crystallinity of the polyethylene is preferably 35 to 55%, and more preferably 40 to 50%. When the degree of crystallinity of the polyolefin is within the range, the polyolefin is easily heat-sealed, so that the sealability of the ink pack is improved, and the storage stability of the ink composition in the ink pack can be improved.

The ink pack usable in the present invention is not particularly limited, but is preferably a laminate having a plurality of layers. The ink pack is preferably, for example, a laminate including a film serving as a substrate and at least one layer of a gas barrier layer, an adhesive layer, or a heat seal layer.

In a preferred embodiment of the present invention, the ink pack preferably includes a heat seal layer, and the heat seal layer preferably contains a polyethylene having a degree of crystallinity of 35 to 55%. When a heat seal layer contains said polyolefin, the hear seal layer is easily heat-sealed, so that the sealability of the ink pack is improved, and the storage stability of the ink composition in the ink pack can be improved. Furthermore, the moldability of the ink pack can be improved.

In an embodiment of the present invention, the ink pack includes a container such as a cartridge, a bottle, a tank, and a pouch, an ink inlet, an ink outlet, and an ink composition filled in the pack.

As the pouch, an aluminum pouch can be used. For example, the aluminum pouch may have a layer configuration in which a PET layer, an aluminum layer, a nylon layer, an adhesive layer, and an LLDPE layer are laminated in this order from the outer layer.

As a usage mode of the ink pack of the present invention, for example, the ink pack can be used by housing the ink pack in an ink cartridge and mounting the ink cartridge on an inkjet recording apparatus.

<Inkjet recording method>

In an inkjet recording method using the ink composition of the present invention, an image is formed on a substrate using the ink composition described above. More specifically, the ink composition described above is discharged from an inkjet head onto a substrate, and the composition discharged onto the substrate is photocured.

The photocuring of the ink composition of the present invention may be performed simultaneously with the discharging, or may be performed immediately after the discharging. The degree of reactivity (reaction rate of monomer double bond) of the polymerizable compound in the ink composition may be adjusted according to the process and application. For example, when the ink composition is semi-cured (reaction rate of monomer double bond is about 50%), curing and shrinkage of the monomer are suppressed, and thus curling caused by a difference in shrinkage between the substrate and the coating film of the ink composition is suppressed, so that adhesion to the substrate may be improved. Finally, the ink composition is preferably fully cured (reaction rate of monomer double bond is 90 to 100%) from the viewpoint of the strength of the printed matter and low tackiness. The reaction rate can be determined, for example, by measuring an infrared absorption spectrum (IR) of the coating film. Examples of the light for photocuring include far infrared rays, infrared rays, visible rays, near ultraviolet rays, and ultraviolet rays. Among them, near ultraviolet rays or ultraviolet rays are preferable from the viewpoint of ease and efficiency of curing operation.

The amount of energy required for the photocuring reaction varies depending on the type, content, and the like of the polymerization initiator, but in general, the integrated light quantity is preferably about 100 $mJ/cm^2$ or more and 10,000 $mJ/cm^2$ or less.

In the recording method of the present invention, droplets of the ink composition discharged from the inkjet head are preferably ejected (preferably by an inkjet nozzle) in a droplet size of 1 pL or more and 25 pL or less, and more preferably a droplet size of 1 pL or more and 15 pL or less. When the droplet size is within the range, it is effective in that an image can be drawn in a highly sharp image density.

The ink composition of the present invention is preferably discharged from the inkjet head so that the thickness of the coating film on the substrate is preferably 1 to 20 $\mu$m.

The substrate to be used may be an absorbent substrate or a non-absorbent substrate. Examples of the absorbent substrate include paper, cloth, fiber, leather, and wood. Examples of the non-absorbent substrate include a plastic film, a substrate such as paper with which plastic is coated, and a substrate such as paper to which a plastic film is bonded. Examples of the plastic include polyvinyl chloride, polyethylene terephthalate, polycarbonate, polystyrene, polyurethane, polyethylene, polypropylene, acrylic resin, and polyacetal. In addition, for example, a non-absorbent substrate made of a metal such as aluminum, iron, gold, silver, copper, nickel, titanium, chromium, molybdenum, silicon, lead, zinc, or stainless steel, glass, or ceramics may be used.

The substrate may be subjected to a surface modification treatment according to the purpose and application. Examples of the surface modification treatment include corona treatment, plasma treatment, flame treatment, and chemical liquid cleaning treatment. The surface modification treatment can be performed by a method publicly-known in the art.

EXAMPLES

Hereinafter, the present invention will be described more specifically based on Examples and Comparative Examples, but the present invention is not limited to the following Examples. "%" and "part(s)" in the examples are "mass%" and "part(s) by mass", respectively, unless otherwise specified.

The components of the ink compositions used in Examples and Comparative Examples are shown in Table 1 below.

[Table 1]

| Abbreviation | Component name | Product name | SP value $(cal/cm^3)^{1/2}$ |
|---|---|---|---|
| 2EHA | 2-Ethylhexyl acrylate | 2EHA, manufactured by Toagosei Co., Ltd. | 8.6 |
| TMCHA | 3,3,5-Trimethylcyclohexyl acrylate | Viscoat #196, manufactured by Osaka Organic Chemical Industry Ltd. | 8.7 |
| IBXA | Isobornyl acrylate | IBXA, manufactured by Osaka Organic Chemical Industry Ltd. | 9.3 |
| THFA | Tetrahydrofurfuryl acrylate | SR285, manufactured by Arkema S.A. | 9.5 |
| PEA | 2-Phenoxyethyl acrylate | SR339, manufactured by Arkema S.A. | 10.1 |

(continued)

| Abbreviation | Component name | Product name | SP value (cal/cm$^3$)$^{1/2}$ |
|---|---|---|---|
| HPPA | 2-Hydroxy-3-phenoxypropyl acrylate | Epoxy Ester M-600A, manufactured by Kyoeisha Chemical Co., Ltd. | 11.9 |
| HDDA | 1,6-Hexanediol diacrylate | SR238, manufactured by Arkema S.A. | 9.6 |
| TCDDA | Tricyclodecane dimethanol diacrylate | SR833, manufactured by Arkema S.A. | 10.2 |
| PE-3A | Pentaerythritol triacrylate | Light Acrylate PE-3A, manufactured by Kyoeisha Chemical Co., Ltd. | 11.5 |
| TTO55(B) | Fine particle titanium oxide (average particle size: 40 nm, specific surface area: 40 m$^2$/g) | TTO-55 (B), manufactured by Ishihara Sangyo Kaisha, Ltd. | - |
| S33000 | Polymer dispersant containing polyester polyamide | SOLSPERSE 33000, manufactured by Lubrizol Japan Ltd. | - |
| CR60 | Titanium oxide (average particle size: 210 nm, specific surface area: 10 m$^2$/g) | CR-60, manufactured by Ishihara Sangyo Kaisha, Ltd. | - |
| P-BFS | Copper phthalocyanine pigment (average particle size: 78 nm, specific surface area: 47 m$^2$/g) | HOSTAPERM BLUE P-BFS, manufactured by Clariant Japan K.K. | |
| TPO | 2,4,6-Trimethylbenzoyl-diphenyl-phosphine oxide | DAROCUR TPO, manufactured by BASF SE | - |
| 907 | 2-Methyl-1-[4-(methylthio)phenyl]-2-morpholinopropan-1-one | Ominirad 907, manufactured by IGM Resins | - |
| ITX | Isopropylthioxanthone | DOUBLECURE2-ITX, manufactured by Double Bond Chemical Ind. Co., Ltd. | - |
| TEMPOL | 4-Hydroxy-2,2,6,6-tetramethylpiperidine-N-oxyl | HYDROXY-TEMPO, manufactured by Evonik Japan Co., Ltd. | - |
| UV3510 | Silicone-based compound having polydimethylsiloxane structure | BYK-UV3510, manufactured by BYK-Chemie | - |

(SP value of monomer)

The SP value of the monomer in Table 1 is a value at 25°C obtained by the Fedors method (Yuji Harazaki, "Coating Fundamentals and Engineering", Chapter 3, page 35, 1977, published by Maki Shoten), and specifically, a value calculated according to the following method.

Fedors considers that both the cohesive energy density and the molar volume depend on the type and number of substituents, and proposes the following equation and constants corresponding to each substituent.

$$\delta = (\Delta E/V)^{1/2} = (\Sigma\Delta ei/\Sigma\Delta vi)^{1/2}$$

wherein $\delta$ is the SP value (cal/cm$^3$)$^{1/2}$, $\Delta E$ is the cohesive energy density, V is the molar volume, $\Delta ei$ is the evaporation energy (cal/mol) of each atom or atomic group, and $\Delta vi$ is the molar volume (cm$^3$/mol) of each atom or atomic group.

In addition, for the compound having a glass transition temperature Tg of 25°C or higher, the following value was added to the molar volume: provided that the number of atoms of the main chain skeleton in the repeating unit in the compound was n, 4n was added to $\Delta vi$ when n < 3, and 2n was added to $\Delta vi$ when n $\geq$ 3.

(Average particle size of particles)

The average particle size of the particles in Table 1 is a particle size obtained by observing and measuring the particle size of each primary particle separated by the grain boundary with a transmission electron microscope (TEM), then determining the average value of major axis diameters and the average value of minor axis diameters of at least 100 particles, and averaging the average value of the major axis diameter and the average value of the minor axis diameter.

(Specific surface area of particles)

The specific surface area of the particles in Table 1 was measured by a multipoint nitrogen adsorption method (BET method).

(Preparation of white ink composition)

First, a primary dispersion of a colorant (pigment) was prepared in the following manner in the blending amounts (unit: mass%) shown in Table 2. That is, a photopolymerizable compound HDDA, a colorant CR60, an aggregation inhibitor TTO55 (B), and a dispersant S33000 were weighed in a plastic bottle. Then, 100 parts by mass of zirconia beads having a diameter of 0.3 mm were added to the weighed components, and this mixture was subjected to dispersion treatment for 1 hour with a paint conditioner.

Next, a pigment ink was prepared as follows using the primary dispersion. That is, the remaining components were added to the primary dispersion in blending amounts (unit: mass%) shown in Table 2, and the mixture was stirred for 30 minutes with a magnetic stirrer. After stirring, the mixture was subjected to suction filtration using glass fiber filter paper GFP (trapped particle 0.8 $\mu$m, manufactured by Kiriyama Glass. CO.) to prepare a white ink composition.

(Preparation of cyan ink composition)

First, a primary dispersion of a colorant (pigment) was prepared in the following manner in the blending amounts (unit: mass%) shown in Table 2. That is, a photopolymerizable compound HDDA, a colorant P-BFS, an aggregation inhibitor TTO55 (B) and a dispersant S33000 were weighed in a plastic bottle. Then, 100 parts by mass of zirconia beads having a diameter of 0.3 mm were added to the weighed components, and this mixture was subjected to dispersion treatment for 1 hour with a paint conditioner.

Next, a pigment ink was prepared as follows using the primary dispersion. That is, the remaining components were added to the primary dispersion in blending amounts (unit: mass%) shown in Table 2, and the mixture was stirred for 30 minutes with a magnetic stirrer. After stirring, the mixture was subjected to suction filtration using glass fiber filter paper GFP (trapped particle 0.8 $\mu$m, manufactured by Kiriyama Glass. CO.) to prepare a cyan ink composition.

(Preparation of clear ink composition)

Each component was weighed at the blending amounts (unit: mass%) shown in Table 2, and stirred for 30 minutes with a magnetic stirrer. After stirring, the mixture was subjected to suction filtration using glass fiber filter paper GFP (trapped particle 0.8 $\mu$m, manufactured by Kiriyama Glass. CO.) to prepare a clear ink composition.

(Preparation of ink pack)

Each of the prepared ink compositions was filled in an aluminum pouch [layer configuration: PET layer (thickness: 20 $\mu$m), aluminum layer (thickness: 10 $\mu$m), nylon layer (thickness: 20 $\mu$m), adhesive layer (thickness: 10 $\mu$m), and LLDPE layer (thickness: 50 $\mu$m, degree of crystallinity: 50%) in this order from the outer layer] so that air did not enter, and the aluminum pouch was heat-sealed. The pouch was stored under the condition of 70°C for 4 days in an environmental tester, and then naturally cooled to 25°C.

(Analysis of polyethylene in ink composition)

1) Aggregation

The ink compositions of Examples and Comparative Examples after being stored at 70°C for 4 days and naturally cooled to 25°C were subjected to suction filtration with a SUS mesh (pore size: 5 $\mu$m). Then, the presence or absence of the residue (residue A) on the mesh was confirmed with an optical microscope. When the residue A was present, the residue A was further subjected to IR analysis under the following conditions.

Detector: NEXUS470 (manufactured by Thermo Fisher Scientific Inc.)
Measurement method: transmission method (microscopic mode)
Resolution: 4 cm$^{-1}$
Number of scans: 64
The main peaks (peaks near 2915 cm$^{-1}$, 2850 cm$^{-1}$, 1465 cm$^{-1}$, and 720 cm$^{-1}$) of polyethylene were confirmed to determine that the residue A was a polyethylene aggregate.

2) Dispersion

The ink compositions of Examples and Comparative Examples after being stored at 70°C for 4 days and naturally cooled to 25°C were subjected to suction filtration with a SUS mesh (pore size: 5 $\mu$m), and the filtrate was used as a filtrate B. The filtrate B was centrifuged using a batch type centrifuge H-9R (radius of angle rotor: 14.1 cm, 7500 rpm, manufactured by KOKUSAN Co. Ltd.) to precipitate a solid component (solid component C). Next, the supernatant (supernatant D) after precipitation was optionally diluted with dipropylene glycol monomethyl ether acetate (DPMA) by about 0.001 to 10% so as to obtain the scattering intensity and the detection sensitivity using a particle size analyzer, and this was used as a measurement sample. The hydrodynamic diameter for analyzing the particle size was measured from the Stokes-Einstein equation with a dynamic light scattering particle size analyzer (FPAR1000, manufactured by Otsuka Electronics Co., Ltd). In addition, it was confirmed whether polyethylene was detected by IR analysis of the supernatant D. In a case where the scattering intensity was increased as compared with the case where only the diluent solvent was measured in the particle size distribution measurement, the particle size was counted, and polyethylene was detected in the IR analysis, it was determined that polyethylene was dispersed in the ink composition.

3) Adsorption and 4) dissolution

The solid component C precipitated by centrifugation in the item 2) was immersed in a solvent (1,2,4-trichlorobenzene), and this was shaken at 140°C for 1 hour. After shaking, the solid component was precipitated by centrifugation, and the supernatant (supernatant E) was then subjected to preparative GPC (gel permeation chromatograph) to obtain a fraction (fraction F) corresponding to the pigment and the nanoparticles. Conditions for GPC are shown below.

Measuring instrument: HLC-8321 GPC/HT (manufactured by Tosoh Corporation)
Column: TSKgel GMH$_{HR}$-H(20)HT (manufactured by Tosoh Corporation)
Detector: RI (refractive index detector)
Eluent: 1,2,4-trichlorobenzene
Temperature: 140°C (column)
Flow rate: 1 mL/min

Furthermore, the presence or absence of polyethylene was confirmed by IR analysis of the fraction F. When polyethylene was detected in the fraction F by IR analysis, it was determined that polyethylene was adsorbed on the nanoparticles. When polyethylene was not detected in the fraction F and polyethylene was detected in the supernatant D by IR analysis, it was determined that polyethylene was dissolved in the ink composition.

[Table 2]

| Component | | Abbreviation | Component composition (mass%) | | | | | |
|---|---|---|---|---|---|---|---|---|
| | | | Examples | | | Comparative Examples | | |
| | | | 1 | 2 | 3 | 1 | 2 | 3 |
| | | | Clear | White | Cyan | Clear | White | Cyan |
| Polymerizable compound | Monofunctional monomer | 2EHA | - | 5.00 | 5.00 | - | 5.00 | 5.00 |
| | | TMCHA | - | 13.00 | 10.00 | - | 13.00 | 10.00 |
| | | IBXA | 20.0 | - | 10.00 | 20.00 | - | 10.00 |
| | | THFA | 30.0 | 38.00 | 32.00 | 30.00 | 38.00 | 32.00 |
| | | PEA | 10.0 | - | - | 10.00 | - | - |
| | | HPPA | - | 12.00 | 8.00 | - | 12.00 | 8.00 |
| | Polyfunctional monomer | HDDA | 20.09 | 8.89 | 16.99 | 20.89 | 11.09 | 18.09 |
| | | TCDDA | 3.00 | - | 3.00 | 3.00 | - | 3.00 |
| | | PE-3A | 3.00 | - | - | 3.00 | - | - |
| Aggregation inhibitor | Inorganic nanoparticles | TTO55(B) | - | 2.00 | 1.00 | - | - | - |
| | Polymer dispersant | S33000 | 0.80 | 1.00 | 0.90 | - | 0.80 | 0.80 |
| Colorant | | CR60 | - | 8.00 | - | - | 8.00 | - |
| | | P-BFS | - | - | 2.00 | - | - | 2.00 |
| Photopolymerization initiator | | TPO | 13.00 | 12.00 | 2.00 | 13.00 | 12.00 | 2.00 |
| | | 907 | - | - | 6.00 | - | - | 6.00 |
| Photosensitizer | | ITX | - | - | 3.00 | - | - | 3.00 |
| Polymerization inhibitor | | TEMPOL | 0.10 | 0.10 | 0.10 | 0.10 | 0.10 | 0.10 |
| Surface conditioner | | UV3510 | 0.01 | 0.01 | 0.01 | 0.01 | 0.01 | 0.01 |
| Total | | | 100.00 | 100.00 | 100.00 | 100.00 | 100.00 | 100.00 |
| Polyethylene in composition | | | Dispersion + dissolution | Adsorption + dispersion + dissolution | Adsorption + dispersion + dissolution | Aggregation + dissolution | Aggregation + dissolution | Aggregation + dissolution |

(Measurement of viscosity)

The viscosity of the ink compositions of Examples and Comparative Examples after being stored at 70°C for 4 days and naturally cooled to 25°C was measured under the conditions of 25°C and a cone rotation of 5 rpm using an R100 type viscometer (manufactured by Toki Sangyo Co., Ltd.).

(Measurement of coarse particles)

The ink compositions of Examples and Comparative Examples after being stored at 70°C for 4 days and naturally cooled to 25°C were measured for the number of coarse particles having a particle size of 2 $\mu$m or more under the conditions of a sample of 100 ml and 25°C using a liquid particle sensor KS-42D (manufactured by RION Co., Ltd, measurement region: 2 to 100 $\mu$m), and evaluated according to the following criteria.

○: Less than 10,000
△: 10,000 or more and less than 100,000
✕: 100,000 or more

(Preparation of printed matter sample for evaluation)

Each of the ink compositions of Examples and Comparative Examples after being stored at 70°C for 4 days and naturally cooled to 25°C was applied onto a polyethylene terephthalate film (white PET film manufactured by DuPont Teijin Films, trade name "U292W") having a substrate thickness of 188 $\mu$m with a bar coater to form an ink solid coating film having a thickness of 15 $\mu$m. The coating film was irradiated with ultraviolet rays using a high-pressure mercury lamp (peak illuminance: 300 mW/cm$^2$) as an irradiation means so that the total irradiation light quantity was 500 mJ/cm$^2$, and cured to obtain a solid printed matter.

(Curing rate)

The solid printed matter formed in the above-described procedure was touched with a finger, and the curability was evaluated according to the following criteria.

○: There is no stickiness, and the ink does not adhere to the finger
△: There is stickiness, and ink slightly adheres to the finger
✕: Very sticky, ink adheres to the finger

(Adhesion)

The solid printed matter formed in the above-described procedure was cross-cut, and the surface on the adhesive layer side of the adhesive sheet [Cellotape (registered trademark) (manufactured by Nichiban Co., Ltd.)] was attached to the cut printed matter, and then peeled off.
The adhesion was evaluated according to the following criteria.

○: No peeling occurred
△: Slightly peeled off
✕: The entire surface of the part to which the adhesive sheet was attached was peeled off

(Filtration test)

The ink compositions of Examples and Comparative Examples after being stored at 70°C for 4 days and naturally cooled to 25°C were subjected to suction filtration with a SUS mesh (pore size: 5 $\mu$m). Then, the state of the residue on the mesh was observed with an optical microscope, and the storage stability of the ink composition was evaluated according to the following criteria.

○: No residue
△: Slight residue
✕: Large amount of residue

(Dischargeability)

The ink compositions of Examples and Comparative Examples after being stored at 70°C for 4 days and naturally cooled to 25°C were filled in a commercially available LED-UV curing inkjet printer (droplet size: 7 pl, resolution: $720 \times 600$ dpi, LED wavelength: 385 nm, peak illuminance: 1200 mW/cm$^2$, integrated light quantity: 2600 mJ/cm$^2$, UV lamp installed beside head). Then, each ink composition was discharged from an inkjet head onto a PET substrate ("U292W" manufactured by DuPont Teijin Films), and simultaneously irradiated with UV each time ink droplets landed on the substrate, thereby continuously producing 10 lettering printed matters on the PET substrate from a printer stage.
The dischargeability was evaluated according to the following criteria.

○: No discharge omission, no landing deviation
△: There is discharge omission and landing deviation, and there is a problem in practical use
×: There are a large number of discharge omissions, and characters cannot be formed

The evaluation results are shown in Table 3.

[Table 3]

|  | Examples | | | Comparative Examples | | |
|---|---|---|---|---|---|---|
|  | 1 | 2 | 3 | 1 | 2 | 3 |
| Viscosity (mPa·s) | 7.7 | 7.6 | 7.2 | 7.5 | 7.4 | 7.0 |
| Coarse particles | ○ | ○ | ○ | × | × | △ |
| Curing rate | ○ | ○ | ○ | ○ | ○ | ○ |
| Adhesion | ○ | ○ | ○ | ○ | ○ | ○ |
| Filtration test | ○ | ○ | ○ | × | × | △ |
| Discharge test | ○ | ○ | ○ | × | × | × |

**Claims**

1. An ink composition comprising: a polymerizable compound; a polyolefin; and a polyolefin aggregation inhibitor.

2. The composition according to claim 1, wherein the aggregation inhibitor contains nanoparticles and/or a polymer dispersant.

3. The composition according to claim 2, wherein at least a part of the polyolefin is adsorbed to the nanoparticles.

4. The composition according to claim 2, wherein at least a part of the polyolefin is dispersed in the composition.

5. The composition according to claim 1, wherein at least a part of the polyolefin is dissolved in the composition.

6. The composition according to claim 1, wherein the polymerizable compound contains a monofunctional monomer (A) having an SP value of 7.8 (cal/cm$^3$)$^{1/2}$ or more and 9.6 (cal/cm$^3$)$^{1/2}$ or less.

7. The composition according to claim 6, wherein the polymerizable compound further contains a monofunctional monomer (B) having an SP value of less than 7.8 (cal/cm$^3$)$^{1/2}$ or more than 9.6 (cal/cm$^3$)$^{1/2}$.

8. The composition according to claim 7, wherein a mass ratio of the monofunctional monomer (A) to the monofunctional monomer (B) is 1 : 1 to 10 : 1.

9. The composition according to claim 1, wherein a mass ratio of the polymerizable compound to the aggregation inhibitor is 10 : 1 to 200 : 1.

10. The composition according to claim 1, wherein the polyolefin includes a polyethylene.

11. The composition according to claim 2, wherein the nanoparticles contain at least one selected from the group consisting of titanium oxide, aluminum oxide, zirconium oxide, zinc oxide, strontium titanate, lithopone, kaolinite, montmorillonite, talc, barium sulfate, calcium carbonate, silicon dioxide, tin oxide, phosphorus-containing tin oxide (PTO), antimony oxide, antimony-containing tin oxide (ATO), aluminum-containing zinc oxide (AZO), gallium-containing zinc oxide (GZO), indium oxide, and tin-containing indium oxide (ITO).

12. The composition according to claim 2, wherein the polymer dispersant contains a polyester polyamide having a weight average molecular weight of 1000 or more and 70000 or less.

13. The composition according to claim 1, comprising no colorant.

14. The composition according to claim 1, further comprising a colorant.

15. The composition according to claim 14, wherein the colorant contains a white pigment.

16. The composition according to claim 1, wherein the ink composition is filled in a container.

17. The composition according to claim 16, wherein a liquid contact portion in contact with the ink composition in the container contains a polyolefin.

18. The composition according to claim 17, wherein the polyolefin contains a polyethylene having a degree of crystallinity of 35% or more and 55% or less.

19. The composition according to claim 1, wherein the ink composition is an ink composition for inkjet.

20. An ink set comprising the composition according to claim 13 and/or the composition according to claim 14.

21. An ink pack filled with an ink composition, wherein

in the ink pack, a liquid contact portion in contact with the ink composition contains a polyolefin, and
the ink composition contains a polymerizable compound, a polyolefin derived from the liquid contact portion of the ink pack, and a polyolefin aggregation inhibitor.

22. The ink pack according to claim 21, wherein the polyolefin contains a polyethylene having a degree of crystallinity of 35% or more and 55% or less.

23. The ink pack according to claim 21, wherein the ink pack is a laminate including at least one of a gas barrier layer, an adhesive layer, or a heat seal layer.

24. The ink pack according to claim 23, wherein the heat seal layer contains the polyolefin according to claim 22.

25. An inkjet recording method comprising:

discharging the composition according to claim 1 from an inkjet head onto a substrate; and
photocuring the composition discharged onto the substrate.

## INTERNATIONAL SEARCH REPORT

| International application No. |
| --- |
| **PCT/JP2024/013201** |

**A. CLASSIFICATION OF SUBJECT MATTER**

*C09D 11/38*(2014.01)i; *B41J 2/01*(2006.01)i; *B41J 2/175*(2006.01)i; *B41M 5/00*(2006.01)i; *C09D 11/40*(2014.01)i
FI: C09D11/38; B41J2/01 127; B41J2/175 143; B41M5/00 100; B41M5/00 120; C09D11/40

According to International Patent Classification (IPC) or to both national classification and IPC

**B. FIELDS SEARCHED**

Minimum documentation searched (classification system followed by classification symbols)

C09D11/38; B41J2/01; B41J2/175; B41M5/00; C09D11/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2013-10832 A (FUJIFILM CORPORATION) 17 January 2013 (2013-01-17) claims, paragraphs [0089], [0105], [0106], [0134], [0136], table 1, examples | 1, 2, 4-10, 12, 14-25 |
| A | JP 2004-51924 A (KONICA MINOLTA HOLDINGS, INC.) 19 February 2004 (2004-02-19) entire text | 1-25 |

☐ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **22 April 2024** | **14 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/013201**

| Patent document cited in search report | | | Publication date (day/month/year) | Patent family member(s) | | | Publication date (day/month/year) |
|---|---|---|---|---|---|---|---|
| JP | 2013-10832 | A | 17 January 2013 | US | 2013/0002773 | A1 | |
| | | | | claims, paragraphs [0089], [0105], [0106], [0134], [0136], table 1, examples | | | |
| | | | | EP | 2540783 | A1 | |
| | | | | CN | 102850844 | A | |
| JP | 2004-51924 | A | 19 February 2004 | US | 2004/0017451 | A1 | |
| | | | | entire text | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023058772 A

- JP 2010214868 A

**Non-patent literature cited in the description**

- Coating no Kiso Kagaku. **YUJI HARAZAKI**. Basic Science of Coating. Maki Shoten, 1977, 35